# EUROPÄISCHE PATENTSCHRIFT

(11) **EP 4 244 080 B1**
(45) Veröffentlichungstag und Bekanntmachung des Hinweises auf die Patenterteilung: **23.04.2025**
(21) Anmeldenummer: 21806984.7
(22) Anmeldetag: 01.11.2021
(51) Int. Cl.: B60C 11/03, B60C 11/12

(54) **FAHRZEUGLUFTREIFEN**
PNEUMATIC VEHICLE TIRE
BANDAGE PNEUMATIQUE DE VÉHICULE

(30) Priorität: 16.11.2020 DE 102020214363
(43) Veröffentlichungstag der Anmeldung: 20.09.2023
(73) Patentinhaber: Continental Reifen Deutschland GmbH, 30175 Hannover (DE)
(72) Erfinder: BROCKMANN, Jürgen, 30165 Hannover (DE); BRANDAU, Christian, 30165 Hannover (DE); SUBRAMANIAN SIVANARUTCHELVI, Manickaraj, 30165 Hannover (DE); SENG, Matthias, 30165 Hannover (DE)
(74) Vertreter: Continental Corporation
(86) Internationale Anmeldenummer: PCT/DE2021/200167
(87) Internationale Veröffentlichungsnummer: WO 2022/100798

(56) Entgegenhaltungen:
- EP-A1- 3 702 176
- EP-A2- 1 106 394
- DE-A1- 102010 006 051
- DE-A1- 102012 104 719
- JP-A- 2015 171 872
- US-A1- 2010 116 392

## Beschreibung

Die Erfindung betrifft einen Fahrzeugluftreifen mit einem laufrichtungsgebundenen Laufstreifen mit zwei schulterseitigen Profilrippen, zwei mittleren Profilrippen und einer zentralen Profilrippe, wobei die Profilrippen durch zwei schulterseitige Umfangsrillen und zwei mittlere Umfangsrillen getrennt sind, wobei die schulterseitigen Profilrippen und die mittleren Profilrippen durch in Draufsicht V-förmig über die Laufstreifenbreite sowie innerhalb der Profilrippen parallel zueinander verlaufende, in die schulterseitigen Umfangsrillen einmündende Querrillen in Profilblöcke gegliedert sind und wobei die schulterseitigen Umfangsrillen in Draufsicht zur Umfangsrichtung geneigt verlaufende, jeweils einen Profilblock der mittleren Profilrippen von einem Profilblock der schulterseitigen Profilrippen trennende Rillenabschnitte mit einem beim Abrollen des Reifens bei Vorwärtsfahrt zuerst in Untergrund eintretenden, einlaufenden Ende und einem auslaufenden Ende aufweisen, wobei die Querrillen, welche in den mittleren Profilrippen verlaufen, in einem in axialer Richtung ermittelten Abstand vor der jeweiligen mittleren Umfangsrille enden, wobei die Rillenabschnitte der schulterseitigen Umfangsrillen, in Draufsicht betrachtet, derart zur Umfangsrichtung geneigt sind, dass sich die einlaufenden Enden der Rillenabschnitte gegenüber den auslaufenden Enden der Rillenabschnitte näher zur Reifenäquatorialebene befinden.

Ein derartiger Fahrzeugluftreifen ist beispielsweise aus der EP 3 702 176 A1 bekannt. Der Reifen weist einen Laufstreifen mit fünf Profilrippen auf, welche durch Umfangsrillen getrennt sind, wobei die schulterseitigen Umfangsrillen zur Umfangsrichtung unter einem Winkel von 5° bis 15° verlaufende Rillenabschnitte aufweisen. Die schulterseitigen Profilrippen und die mittleren Profilrippen sind durch in Draufsicht V-förmig über die Laufstreifenbreite verlaufende, in die schulterseitigen Umfangsrillen einmündende Querrillen in Profilblöcke gegliedert, wobei die Querrillen, welche in den mittleren Profilrippen verlaufen, in einem in axialer Richtung ermittelten Abstand vor der jeweiligen mittleren Umfangsrille enden. Die mittleren Profilrippen weisen daher jeweils einen bandförmigen, laufstreifeninnenseitigen Rippenabschnitt und einen durch die Querrillen in die Profilblöcke gegliederten, laufstreifenaußenseitigen Rippenabschnitt auf. Der Fahrzeugluftreifen soll eine gute Nässeperformance und für ein gutes Ansprechverhalten auf Lenkkräfte aufweisen.

Aus der DE 10 2012 104 719 A1 ist ein Fahrzeugluftreifen mit einem laufrichtungsgebundenen Laufstreifen mit fünf Profilrippen bekannt, wobei die schulterseitigen Profilrippen und die mittleren Profilrippen durch in Draufsicht V-förmig über die Laufstreifenbreite verlaufende Querrillen in Profilblöcke gegliedert sind. Die schulterseitigen Umfangsrillen weisen in Draufsicht zur Umfangsrichtung geneigt verlaufende Rillenabschnitte auf. In den Profilblöcken der mittleren Profilrippen ist jeweils eine in Verlängerung einer Querrille aus der benachbarten, schulterseitigen Profilrippe verlaufende, innerhalb des jeweiligen Profilblocks sacknutartig endende Querrille ausgebildet. Der Reifen soll eine gute Nass- und Schneebremsperformance aufweisen.

Die US 2010/116392 A1 offenbart einen Fahrzeugluftreifen mit einem Laufstreifen mit fünf durch Umfangsrillen voneinander getrennten Profilrippen. Die schulterseitigen Profilrippen weisen Profilblöcke auf und die zentralen Profilrippe ist bandförmig ausgeführt. Die mittleren Profilrippen sind jeweils mit einer schmalen Umfangsrille und mit in Umfangsrichtung abwechselnd aufeinanderfolgenden, die mittlere Profilrippe durchquerenden, ersten Querrillen und zwischen der angrenzenden schulterseitigen Umfangsrille und der schmalen Umfangsrille verlaufenden, zweiten Querrillen versehen. Durch diese Profilierung weist jede mittlere Profilrippe in Umfangrichtung länger ausgeführte, laufstreifeninnenseitig angeordnete Profilblöcke und zwei je einem solchen Profilblock zugeordnete, in Umfangsrichtung kürzer ausgeführte, laufstreifenaußenseitig angeordnete Profilblöcke auf. Der Reifen soll eine gute Eis- und Nässeperformance aufweisen.

Aus der DE 10 2010 006 051 A1 ist ein weiterer Fahrzeugluftreifen mit einem Laufstreifen mit fünf durch Umfangsrillen voneinander getrennten Profilrippen bekannt. In den mittleren Profilrippen sind in Umfangsrichtung abwechselnd durchquerende Querrillen mit sacknutartig endenden Querrillen ausgebildet. Die zentrale Profilrippe ist seitlich mit in Umfangsrichtung langgestreckten Vorsprüngen versehen, welche jeweils eine in Richtung Laufstreifenaußenseite radial nach innen abfallende Deckfläche aufweisen. Der Reifen soll eine gute Schneeperformance und eine gute Trockenperformance aufweisen.

Ferner offenbart die JP 2015 171 872 A einen Fahrzeugluftreifen mit einem Laufstreifen mit fünf Profilrippen, wobei in den mittleren Profilrippen sacknutartig endende, in Draufsicht L-förmig verlaufende Querrillen ausgebildet sind. Der Fahrzeugluftreifen soll eine gute Nässeperformance und ein gutes Ansprechverhalten auf Lenkkräfte aufweisen.

Ein Fahrzeugluftreifen, welcher ein mit Spikes im Laufstreifen versehener Winterreifen ist, ist beispielsweise der DE 10 2015 221 118 A1 bekannt. Der Reifen weist einen Laufstreifen mit einer zentralen Profilrippe, zwei mittleren Profilrippen und zwei schulterseitigen Profilrippen auf. Die zentrale Profilrippe ist von in Draufsicht parallel zueinander verlaufenden einschnittartigen Querrillen durchquert. Die in den schulterseitigen Profilrippen und in den mittleren Profilrippen ausgebildeten Querrillen verlaufen in Draufsicht bogenförmig. Die schulterseitigen Umfangsrillen weisen in Draufsicht zur Umfangsrichtung geneigt sowie gleichzeitig - bezogen auf die Umfangsrichtung - gegensinnig zu den Querrillen geneigt verlaufende Rillenabschnitte auf, welche jeweils einen Profilblock der jeweiligen mittleren Profilrippe von einem Profilblock der benachbarten schulterseitigen Profilrippe trennen. In den Profilblöcken der mittleren Profilrippen und den Profilblöcken der schulterseitigen Profilrippen sind Spikes verankert, welche von in den Profilblöcken ausgebildeten, als Eisreservoire wirkenden Vertiefungen umgeben sind.

Fahrzeugluftreifen eingangs genannter Art befinden sich vor allem als Winterreifen im Einsatz. Die V-förmig über die Laufstreifenbreite verlaufenden Querrillen ermöglichen einerseits ein hohes Wasserableitvermögen in Richtung Laufstreifenschulter (gute Nässeperformance) sowie andererseits beim Fahren auf Schnee ein gewisse Aufnahme von Schnee, wodurch - über den Effekt der Schnee-Schnee-Reibung - Vorteile im Hinblick auf die Schneeperformance erzielt werden. Da Winterreifen häufig auch auf trocknen Fahrbahnen gefahren werden, ist die Trockenperformance der Reifen nicht zu vernachlässigen.

Der Erfindung liegt die Aufgabe zugrunde, bei einem Fahrzeugluftreifen eingangs genannter Art die Trocken-, die Nässe- und die Schneeperformance möglichst gleichermaßen zu verbessern.

Gelöst wird die gestellte Aufgabe erfindungsgemäß dadurch, dass die Querrillen eine Breite von 3,5 mm bis 6,5 mm aufweisen, wobei zwischen den laufstreifeninnenseitigen Enden der Querrillen, welche in den mittleren Profilrippen verlaufen, und den mittleren Umfangsrillen Verbindungsnuten verlaufen, welche schmäler sowie seichter ausgeführt sind als die in den mittleren Profilrippen verlaufenden Querrillen.

Die gemäß der Erfindung geneigten Rillenabschnitte der schulterseitigen Umfangsrillen bewirken in Kombination mit den Querrillen beim Fahren auf nasser Fahrbahn eine wirkungsvolle Entwässerung der Laufstreifenprofils, insbesondere eine verbesserte Wasserableitung aus der Bodenaufstandsfläche, und derart eine verbesserte Nässeperformance. Die mittleren Profilrippen sind bedingt durch die vor der jeweiligen mittleren Umfangsrille endenden "sacknutartigen" Querrillen in ihrer Steifigkeit erhöht, wodurch die Kraftübertragung vom Reifen auf den Untergrund und derart die Trockenperformance verbessert ist. Zusätzlich sammelt sich in den sacknutartigen Querrillen beim Fahren auf einer Schneefahrbahn Schnee gut an und wird wirkungsvoll verdichtet, wodurch der Effekt der Schnee-Schnee-Reibung verstärkt und derart Vorteile im Hinblick auf die Schneeperformance erzielt werden.

Die Verbindungsnuten "entkoppeln" die Profilblöcke der mittleren Profilrippen in einem gewissen Grad voneinander, was zum Auftreten eines gleichmäßigen Abriebbildes des Laufstreifens und derart zur Aufrechterhaltung einer guten Trockenperformance beiträgt.

Gemäß einer bevorzugten Ausführung beträgt der Abstand, in welchem die Querrillen, die in den mittleren Profilrippen verlaufen, vor der jeweiligen mittleren Umfangsrille enden, 3,0 mm bis 15,0 mm, insbesondere 5,0 mm bis 10,0 mm. Diese Ausführung der sacknutartigen Querrillen ist vor allem im Hinblick auf die Trockenperformance günstig.

Ferner ist es vorteilhaft, wenn die Rillenabschnitte der schulterseitigen Umfangsrillen, in Draufsicht betrachtet, zur Umfangsrichtung unter einem Winkel von 2° bis 7°, insbesondere von höchstens 5°, verlaufen. Durch derart geneigte Rillenabschnitte wird die Wasserableitung in Richtung zu den seitlichen Rändern der Bodenaufstandsfläche unterstützt, wobei in den schulterseitigen Umfangsrillen gleichzeitig ein hohes Wasserdrainagevermögen in Umfangsrichtung erhalten bleibt. Die Nässeperformance ist somit weiter verbessert.

Eine weitere bevorzugte Ausführung ist dadurch gekennzeichnet, dass die Verbindungsnuten eine Tiefe von 2,0 mm bis 5,0 mm und eine Breite von 1,5 mm bis 3,5 mm aufweisen. Die bevorzugte, entsprechend seichte Ausführung der Verbindungsnuten unterstützt beim Fahren auf Schnee die Schneeansammlung in den Querrillen.

Vorzugsweise verlaufen die Verbindungsnuten, in Draufsicht betrachtet, in axialer Richtung oder zu dieser unter einem Winkel von bis zu 5°.

Gemäß einer weiteren bevorzugten Ausführung ist die zentrale Profilrippe von in Draufsicht parallel zueinander verlaufenden Querrillen durchquert, welche sich jeweils aus zwei V-förmig zueinander und zur axialen Richtung unter einem Winkel von höchstens 12° verlaufenden Rillenabschnitten zusammensetzen, wobei die Neigung der Rillenabschnitte bezüglich der axialen Richtung gleichsinnig zur Neigung der in der jeweils nächstliegenden mittleren Profilrippe verlaufenden Querrillen ist und wobei die Querrillen in der zentralen Profilrippe eine Breite von vorzugsweise 1,8 mm bis 3,5 mm und eine maximale Tiefe von vorzugsweise 70% bis 100%, insbesondere von 100%, der Profiltiefe aufweisen. Die gewählte V-Form der Querrillen trägt zur Entwässerung der zentralen Profilrippe und daher zur Verbesserung der Nässeperformance bei. Sind die Querrillen gemäß der bevorzugten Tiefe und Breite ausgelegt, weist die zentrale Profilrippe eine für die Trockenperformance vorteilhaft hohe Steifigkeit auf.

Gemäß einer weiteren bevorzugten Ausführungsform der Erfindung weisen die zentrale Profilrippe, die mittleren Profilrippen und die schulterseitigen Profilrippen jeweils eine an der Laufstreifenperipherie in axialer Richtung ermittelte maximale Breite auf, wobei die maximale Breite der mittleren Profilrippen größer ist als die maximale Breite der zentralen Profilrippe und wobei die maximale Breite der schulterseitigen Profilrippe innerhalb der Bodenaufstandsfläche ermittelt ist und größer ist als die maximale Breite der mittleren Profilrippen. Die Quersteifigkeit der Profilrippen nimmt somit von Profilrippe zu Profilrippe in Richtung Laufstreifenschulter zu. Dies ist vor allem für die Trockenperformance bei Kurvenfahrt von Vorteil.

In diesem Zusammenhang ist es günstig, wenn die maximale Breite der zentralen Profilrippe 13,5% bis 14,7% der in axialer Richtung ermittelten Breite der Bodenaufstandsfläche des Laufstreifens beträgt.

Ferner ist es in diesem Zusammenhang günstig, wenn die maximale Breite der mittleren Profilrippen 15,8% bis 17,3% der in axialer Richtung ermittelten Breite der Bodenaufstandsfläche des Laufstreifens sowie vorzugsweise 108% bis 123%, insbesondere 110% bis 120%, der Breite der zentralen Profilrippe beträgt.

Darüber hinaus ist es in diesem Zusammenhang günstig, wenn die maximale Breite der schulterseitigen Profilrippen 19,0% bis 21,0% der in axialer Richtung ermittelten Breite der Bodenaufstandsfläche des Laufstreifens sowie vorzugsweise 117% bis 127% der Breite der mittleren Profilrippen beträgt.

Gemäß einer weiteren bevorzugten Ausführung sind die zu den mittleren Profilrippen und die zu den schulterseitigen Profilrippen gehörenden Profilblöcke jeweils von einer Anzahl von in Draufsicht parallel zu den Querrillen verlaufenden Einschnitten mit einer Breite von 0,4 mm bis 1,0 mm und einer maximale Tiefe von 75% bis 100% der Profiltiefe durchquert. Durch den parallelen Verlauf zu den Querrillen weisen die Einschnitte - beispielsweise im Vergleich zu in Draufsicht gewinkelt zu den Querrillen verlaufenden Einschnitten - eine Länge auf, die ein gutes Öffnen der Einschnitte unterstützt, sodass die Einschnitte beim Fahren auf Schnee mehr Schnee aufnehmen und derart zu einer weiteren Verbesserung der Schneeperformance beitragen.

Eine weitere bevorzugte Ausführung ist dadurch gekennzeichnet, dass die zu den mittleren Profilrippen und die zu den schulterseitigen Profilrippen gehörenden Profilblöcke jeweils mit einer Anzahl von in Draufsicht zur Umfangsrichtung unter einem Winkel von bis zu 10° verlaufenden, insbesondere senkrecht zu den Querrillen verlaufenden, Mikrorillen mit einer Breite und einer Tiefe von jeweils 0,3 mm bis 0,6 mm versehen sind.

Eine weitere bevorzugte Ausführung ist dadurch gekennzeichnet, dass die zentrale Profilrippe mit einer Anzahl von in Draufsicht in Umfangsrichtung verlaufenden Mikrorillen mit einer Breite und einer Tiefe von jeweils 0,3 mm bis 0,6 mm versehen ist.

Solche Mikrorillen tragen bei neuem bzw. wenig abgefahrenem Reifen dazu bei, die Griffeigenschaften zu verbessern.

Weitere bevorzugte Ausführungen betreffen die Orientierung der Querrillen, wobei diese Ausführungen vor allem zu einer Verbesserung der Nässeperformance beitragen.

Die Querrillen, welche die mittleren Profilrippen in Profilblöcke gliedern, verlaufen, in Draufsicht betrachtet, zur axialen Richtung vorzugsweise unter einem Winkel von 30° bis 45°.

Die Querrillen, welche die schulterseitigen Profilrippen in Profilblöcke gliedern, verlaufen, in Draufsicht betrachtet, zur axialen Richtung vorzugsweise unter einem Winkel von 0° bis 25°, insbesondere von 5° bis 20°.

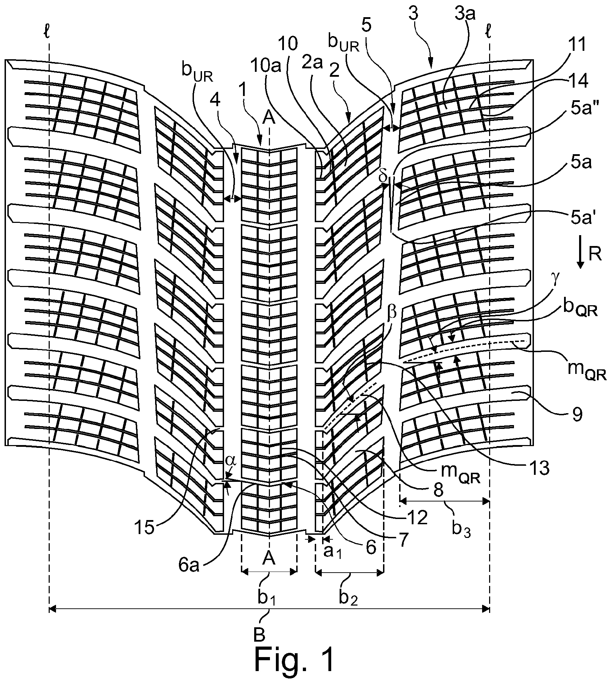

Weitere Merkmale, Vorteile und Einzelheiten der Erfindung werden nun anhand der einzigen Figur, Fig. 1, die schematisch eine Draufsicht auf einen Umfangsabschnitt eines Laufstreifens eines Fahrzeugluftreifens mit einer Ausführungsvariante der Erfindung zeigt, näher beschrieben.

Gemäß der Erfindung ausgeführte Fahrzeugluftreifen sind Reifen für Kraftfahrzeuge, insbesondere für mehrspurige Kraftfahrzeuge, sowie vorzugsweise Reifen in Radialbauart für Personenkraftwagen, Vans oder Light-Trucks, wobei die Reifen für den Einsatz unter winterlichen Fahrbedingungen vorgesehen sind.

Fig. 1 zeigt eine Draufsicht auf einen Umfangsabschnitt eines Laufstreifens eines Fahrzeugluftreifens. Die Reifenäquatorialebene ist durch eine gestrichelte Linie A-A und die seitlichen Ränder der Bodenaufstandsfläche des Laufstreifens sind durch gestrichelte Linien l angedeutet. Die Bodenaufstandsfläche entspricht dem statisch ermittelten Footprint gemäß E.T.R.T.O.-Standards (Last bei 70 % der maximalen Tragfähigkeit bei einem Innendruck von 85 % nach E.T.R.T.O.-Norm) und weist in axialer Richtung eine Breite B auf.

Der Laufstreifen ist in insbesondere bekannter Weise nach einem Verfahren der Pitchlängenvariation geräuschoptimiert und weist eine laufrichtungsgebundene Profilierung auf, wobei der Reifen derart am Fahrzeug zu montieren ist, dass er die durch den Pfeil R angedeutete Abrollrichtung bei Vorwärtsfahrt aufweist. Ferner weist der Laufstreifen eine zentrale Profilrippe 1, zwei zu dieser benachbart verlaufende mittlere Profilrippen 2 und zwei schulterseitige Profilrippen 3 auf und ist beim gezeigten Ausführungsbeispiel bezüglich der Reifenäquatorialebene (Linie A-A) symmetrisch ausgeführt.

Die mittleren Profilrippen 2 sind jeweils durch eine in Draufsicht beispielsweise gerade verlaufende mittlere Umfangsrille 4 von der zentralen Profilrippe 1 und durch eine in Draufsicht sägezahnförmige verlaufende schulterseitige Umfangsrille 5 von der jeweils angrenzenden schulterseitigen Profilrippe 3 getrennt. Die Umfangsrillen 4, 5 sind auf die jeweils vorgesehene Profiltiefe ausgeführt, welche für den bevorzugten Reifentyp üblicherweise 6,5 mm bis 10,0 mm beträgt, und weisen eine senkrecht zu ihrer Erstreckungsrichtung ermittelte Breite b_{UR} von 6,0 mm bis 13,0 mm auf.

Die zentrale Profilrippe 1 weist an der Laufstreifenperipherie in axialer Richtung eine maximale, beim gezeigten Ausführungsbeispiel konstante Breite b₁ von 13,5% bis 14,7% der Breite B der Bodenaufstandsfläche auf, ist über ihren Umfang mit einer Vielzahl von in Draufsicht parallel zueinander verlaufenden, in die mittleren Umfangsrillen 4 einmündenden, einschnittartigen Querrillen 6 versehen, welche bezogen auf eine die Querrillenenden verbindende Linie in Draufsicht in axialer Richtung verlaufen, eine senkrecht zu ihrer Erstreckung ermittelte Breite von 1,8 mm bis 3,5 mm und in radialer Richtung eine maximale Tiefe von 70% bis 100%, bevorzugt von 100%, der Profiltiefe aufweisen. Beim gezeigten Ausführungsbeispiel setzen sich die Querrillen 6, in Draufsicht betrachtet, aus zwei flach V-förmig zueinander, jeweils gerade sowie zur axialen Richtung unter einem Winkel α von höchstens 12° verlaufenden Rillenabschnitten 6a zusammen, deren an der Reifenäquatorialebene (Linie A-A) liegenden Enden beim Abrollen des Reifens bei Vorwärtsfahrt (Pfeil R) zuerst in den Untergrund eintreten. Ferner ist die zentrale Profilrippe 1 von in Draufsicht parallel zu den Querrillen 6 verlaufenden, schmäler als die Querrillen 6 ausgeführten Einschnitten 7 durchquert. In den Bereichen zwischen den Einschnitten 7 sowie in den Bereichen zwischen den randseitigen Einschnitten 7 und den Querrillen 6 sind jeweils zwei in Umfangsrichtung verlaufende Mikrorillen 12 - je eine Mikrorille 12 an jeder Seite der Reifenäquatorialebene - ausgebildet, welche vorzugsweise in einen Einschnitt 7 oder in eine Querrille 6 einmünden.

Jede mittlere Profilrippe 2 ist mit in Draufsicht parallel zueinander verlaufenden, mittleren Querrillen 8 und jede schulterseitige Profilrippe 3 ist mit in Draufsicht parallel zueinander verlaufenden, schulterseitigen Querrillen 9 versehen, wobei die Querrillen 8, 9 V-förmig über die Laufstreifenbreite und daher in jeder Laufstreifenhälfte zumindest im Wesentlichen in Fortsetzung zueinander verlaufen und wobei die mittleren Querrillen 8 mit ihren laufstreifeninnenseitigen Enden als erstes in den Untergrund eintreten. Die Querrillen 8, 9 weisen in radialer Richtung jeweils eine maximale Tiefe von 70% bis 100% der Profiltiefe und an der Laufstreifenperipherie jeweils eine senkrecht zu ihrer in Draufsicht dem Rillenverlauf folgenden Rillenmittellinie m_{QR} ermittelte Breite b_{QR} von 3,5 mm bis 6,5 mm auf.

Jede mittlere Profilrippe 2 weist an der Laufstreifenperipherie in axialer Richtung eine maximale Breite b₂ von 15,8% bis 17,3% der Breite B der Bodenaufstandsfläche auf, wobei die maximale Breite b₂ vorzugsweise 108% bis 123%, insbesondere 110% bis 120%, der maximalen Breite b₁ der zentralen Profilrippe 1 beträgt. Die Querrillen 8 münden in die schulterseitigen Umfangsrillen 5 ein, enden innerhalb der mittleren Profilrippe 2 in einem an der Laufstreifenperipherie sowie in axialer Richtung ermittelten Abstand a₁ von 3,0 mm bis 15,0 mm, insbesondere von 5,0 mm bis 10,0 mm, vor der jeweiligen mittleren Umfangsrille 4, verlaufen in Draufsicht leicht bogenförmig sowie - bezogen auf die Rillenmittellinien m_{QR} - zur axialen Richtung unter einem Winkel β von 30° bis 45°, wobei der Winkel β über die Erstreckung der Querrillen 8 in Richtung Laufstreifenschulter kontinuierlich um insbesondere bis zu 5° abnimmt, und gliedern die mittlere Profilrippe 2 in Draufsicht in im Wesentlichen parallelogrammförmige mittlere Profilblöcke 2a. Zwischen dem laufstreifeninnenseitigen Ende jeder Querrille 8 und der jeweils nächstliegenden mittleren Umfangsrille 4 verläuft eine in Draufsicht in axialer Richtung ausgerichtete kurze Verbindungsnut 15, welche schmäler und seichter ist als die Querrille 8 sowie eine Breite von vorzugsweise 1,5 mm bis 3,5 mm und in radialer Richtung eine Tiefe von vorzugsweise 2,0 mm bis 5,0 mm aufweist. Die mittleren Profilblöcke 2a sind jeweils mit einer Anzahl von Einschnitten 10 versehen, welche in Draufsicht parallel zu den Rillenmittellinien m_{QR} der mittleren Querrillen 8 verlaufen, einen in axialer Richtung verlaufenden, in die entsprechende mittlere Umfangsrille 4 einmündenden randseitigen Einschnittabschnitt 10a aufweisen und die mittleren Profilblöcke 2a durchqueren. In den Bereichen zwischen den Einschnitten 10 sowie in den Bereichen zwischen den randseitigen Einschnitten 10 und den Querrillen 6 sind zumindest Großteils jeweils zwei in Draufsicht zur Umfangsrichtung unter einem Winkel von insbesondere bis zu 10° verlaufende Mikrorillen 13 ausgebildet, welche vorzugsweise in einen Einschnitt 10 oder in eine Querrille 8 einmünden.

Jede schulterseitige Profilrippe 3 weist an der Laufstreifenperipherie, ermittelt innerhalb der Bodenaufstandsfläche, in axialer Richtung eine maximale Breite b₃ von 19,0% bis 21,0% der Breite B der Bodenaufstandsfläche auf, wobei die maximale Breite b₃ vorzugsweise 117% bis 127% der maximalen Breite b₂ der mittleren Profilrippe 2 beträgt. Die schulterseitigen Querrillen 9 münden in die schulterseitigen Umfangsrillen 5 ein, verlaufen über den jeweiligen seitlichen Rand der Bodenaufstandsfläche (Linie l) hinaus sowie in Draufsicht leicht bogenförmig und - bezogen auf die Rillenmittellinien m_{QR} - zur axialen Richtung unter einem Winkel γ von 0° bis 25°, insbesondere von 5° bis 20°, wobei der Winkel γ innerhalb der Bodenaufstandsfläche über die Erstreckung der Querrillen 9 in Richtung Laufstreifenschulter kontinuierlich um insbesondere bis zu 15° abnimmt und gliedern die schulterseitigen Profilblockreihen 3 in schulterseitige Profilblöcke 3a. Die schulterseitigen Profilblöcke 3a sind jeweils mit einer Anzahl von Einschnitten 11 versehen, welche sich in Draufsicht parallel zu den Rillenmittellinien m_{QR} der Querrillen 9 erstrecken und die Profilblöcke 3a zumindest innerhalb der Bodenaufstandsfläche durchqueren. In den Bereichen zwischen den Einschnitten 11 sowie in den Bereichen zwischen den randseitigen Einschnitten 11 und den schulterseitigen Querrillen 9 sind innerhalb der Bodenaufstandsfläche jeweils insbesondere vier in Draufsicht zur Umfangsrichtung unter einem Winkel von bis zu 10°, beim Ausführungsbeispiel senkrecht zu den Rillenmittellinien m_{QR} der schulterseitigen Querrillen 9 verlaufende Mikrorillen 14 ausgebildet, welche vorzugsweise in einen Einschnitt 11 oder in eine Querrille 9 einmünden.

Die erwähnten maximalen Breiten b₁, b₂ der Profilrippen 1, 2 sind jeweils an der Laufstreifenperipherie zwischen den in axialer Richtung am weitesten voneinander entfernten Stellen der jeweiligen Profilrippe 1, 2 ermittelt. Die ebenfalls erwähnte maximale Breite b₃ der schulterseitigen Profilrippen 3 ist zwischen dem jeweiligen seitlichen Rand der Bodenaufstandsfläche (Linie l) und der von diesem an der Laufstreifenperipherie in axialer Richtung am weitesten entfernten Stelle der Profilrippe 3 ermittelt. Die ebenfalls erwähnten, entsprechend variierenden Winkel β und γ der Querrillen 8, 9 sind jeweils relativ zu einer lokal an die Mittellinie m_{QR} angelegte Tangente ermittelt. Sämtliche Einschnitte 7 (zentrale Profilrippe 1), 10 (mittlere Profilblöcke 2a), 11 (schulterseitige Profilblöcke 3a) weisen eine Breite von 0,4 mm bis 1,0 mm, insbesondere von höchstens 0,8 mm, sowie in radialer Richtung eine maximale Tiefe von 75% bis 100%, insbesondere von 80% bis 95%, der Profiltiefe auf. Sämtliche Mikrorillen 12 (zentrale Profilrippe 1), 13 (mittlere Profilblöcke 2a), 14 (schulterseitige Profilblöcke 3a) weisen eine Breite und Tiefe von 0,3 mm bis 0,6 mm auf, wobei die Breite vorzugsweise 0,4 mm und die Tiefe vorzugsweise 0,5 mm beträgt.

Bedingt durch den V-förmigen Verlauf der Querrillen 8, 9 weist jede schulterseitige Umfangsrille 5 eine Vielzahl von Rillenabschnitten 5a auf, welche jeweils einen schulterseitigen Profilblock 3a vom benachbarten mittleren Profilblock 2a trennen und daher bis zu den Querrillen 8, 9 reichen. Die Rillenabschnitte 5a verlaufen, in Draufsicht betrachtet, gerade sowie zur Umfangsrichtung unter einem Winkel δ von 2° bis 7°, insbesondere von höchstens 5°, wobei sämtliche Rillenabschnitte 5a einer schulterseitigen Umfangsrille 5 in Draufsicht parallel zueinander verlaufen. Jeder Rillenabschnitt 5a weist ein beim Abrollen des Reifens bei Vorwärtsfahrt zuerst in Untergrund eintretendes einlaufendes Ende 5a' und ein auslaufendes Ende 5a" auf und ist derart relativ zur Umfangsrichtung geneigt, dass sich das einlaufende Ende 5a' - gegenüber dem auslaufenden Ende 5a'' - näher zur Reifenäquatorialebene (Linie A-A) befindet. Die Breite b_{UR} der schulterseitigen Umfangsrillen 5 und der Winkel δ der Rillenabschnitte 5a sind vorzugsweise derart aufeinander abgestimmt, dass die schulterseitigen Umfangsrillen 5 keinen oder einen reduzierten "lookthrough" aufweisen, d.h., dass, im in axialer Richtung ausgerichteten Querschnitt betrachtet, keine bzw. eine reduzierte Durchsicht durch die schulterseitigen Umfangsrillen 5 möglich ist.

Die Erfindung ist auf das beschriebene Ausführungsbeispiel nicht beschränkt. Insbesondere können die Größe der maximalen Breiten b₁, b₂, b₃ der Profilrippen 1, 2, 3 von den erwähnten Größen abweichen. Ferner sind die Einschnitte 7, 10, 11 und die Mikrorillen 12, 13, 14 optional. Außerdem können die Querrillen 6 in der mittleren Profilrippe 1 herkömmlich gestaltet sein und die Querrillen 8, 9 in den Profilrippen 2, 3 in Draufsicht auch gerade verlaufen. Die mittlere Profilrippe 2 und die schulterseitige Profilrippe 3, welche sich in der einen Laufstreifenhälfte befinden, können gegenüber der mittleren Profilrippe 2 und der schulterseitigen Profilrippe 3, welche sich in der anderen Laufstreifenhälfte befinden, in Umfangsrichtung versetzt ausgebildete Profilblöcke 2a, 3a und Querrillen 8, 9 aufweisen, sodass der Laufstreifen bezüglich der Reifenäquatorialebene (Linie A-A) nicht symmetrisch ausgeführt ist.

### Bezugsziffernliste

- 1: zentrale Profilrippe
- 2: mittlere Profilrippe
- 2a: mittlerer Profilblock
- 3: schulterseitige Profilrippe
- 3a: schulterseitiger Profilblock
- 4: mittlere Umfangsrille
- 5: schulterseitige Umfangsrille
- 5a: Rillenabschnitt
- 5a: einlaufendes Ende
- 5a: auslaufendes Ende
- 6: einschnittartige Querrille
- 6a: Rillenabschnitt
- 7: Einschnitt
- 8: mittlere Querrille
- 9: schulterseitige Querrille
- 10: Einschnitt
- 10a: Einschnittabschnitt
- 11: Einschnitt
- 12, 13, 14: Mikrorille
- 15: Verbindungsnut
- a₁: Abstand
- A-A: Linie (Reifenäquatorialebene)
- B: Breite
- b₁, b₂, b₃: maximale Breite
- b_{QR}, b_{UR}: Breite
- 1: Linie (seitlicher Rand der Bodenaufstandsfläche)
- m_{QR}: Rillenmittellinie
- R: Pfeil (Abrollrichtung)
- α, β, γ, δ: Winkel

## Patentansprüche

1. Fahrzeugluftreifen mit einem laufrichtungsgebundenen Laufstreifen mit zwei schulterseitigen Profilrippen (3), zwei mittleren Profilrippen (2) und einer zentralen Profilrippe (1), wobei die Profilrippen (1, 2, 3) durch zwei schulterseitige Umfangsrillen (5) und zwei mittlere Umfangsrillen (4) getrennt sind, wobei die schulterseitigen Profilrippen (3) und die mittleren Profilrippen (2) durch in Draufsicht V-förmig über die Laufstreifenbreite sowie innerhalb der Profilrippen (2, 3) parallel zueinander verlaufende, in die schulterseitigen Umfangsrillen (5) einmündende Querrillen (8, 9) in Profilblöcke (2a, 3a) gegliedert sind und wobei die schulterseitigen Umfangsrillen (5) in Draufsicht zur Umfangsrichtung geneigt verlaufende, jeweils einen Profilblock (2a) der mittleren Profilrippen (2) von einem Profilblock (3a) der schulterseitigen Profilrippen (3) trennende Rillenabschnitte (5a) mit einem beim Abrollen des Reifens bei Vorwärtsfahrt zuerst in Untergrund eintretenden, einlaufenden Ende (5a') und einem auslaufenden Ende (5a") aufweisen,
wobei die Querrillen (8), welche in den mittleren Profilrippen (2) verlaufen, in einem in axialer Richtung ermittelten Abstand (a₁) vor der jeweiligen mittleren Umfangsrille (4) enden, wobei die Rillenabschnitte (5a) der schulterseitigen Umfangsrillen (5), in Draufsicht betrachtet, derart zur Umfangsrichtung geneigt sind, dass sich die einlaufenden Enden (5a') der Rillenabschnitte (5a) gegenüber den auslaufenden Enden (5a") der Rillenabschnitte (5a) näher zur Reifenäquatorialebene (Linie A-A) befinden,
**dadurch gekenzeichnet,**
dass die Querrillen (8, 9) eine Breite (b_{QR}) von 3,5 mm bis 6,5 mm aufweisen, wobei zwischen den laufstreifeninnenseitigen Enden der Querrillen (8), welche in den mittleren Profilrippen (2) verlaufen, und den mittleren Umfangsrillen (4) Verbindungsnuten (15) verlaufen, welche schmäler sowie seichter ausgeführt sind als die in den mittleren Profilrippen (2) verlaufenden Querrillen (8).

2. Fahrzeugluftreifen nach Anspruch 1, **dadurch gekennzeichnet, dass** der Abstand (a₁), in welchem die Querrillen (8), die in den mittleren Profilrippen (2) verlaufen, vor der jeweiligen mittleren Umfangsrille (4) enden, 3,0 mm bis 15,0 mm, insbesondere 5,0 mm bis 10,0 mm, beträgt.

3. Fahrzeugluftreifen nach Anspruch 1 oder 2, **dadurch gekennzeichnet, dass** die Rillenabschnitte (5a) der schulterseitigen Umfangsrillen (5), in Draufsicht betrachtet, zur Umfangsrichtung unter einem Winkel (δ) von 2° bis 7°, insbesondere von höchstens 5°, verlaufen.

4. Fahrzeugluftreifen nach einem der Ansprüche 1 bis 3, **dadurch gekennzeichnet, dass** die Verbindungsnuten (15) eine Tiefe von 2,0 mm bis 5,0 mm und eine Breite von 1,5 mm bis 3,5 mm aufweisen.

5. Fahrzeugluftreifen nach einem der Ansprüche 1 bis 4, **dadurch gekennzeichnet, dass** die Verbindungsnuten (15), in Draufsicht betrachtet, in axialer Richtung oder zu dieser unter einem Winkel von bis zu 5° verlaufen.

6. Fahrzeugluftreifen nach einem der Ansprüche 1 bis 5, **dadurch gekennzeichnet, dass** die zentrale Profilrippe (1) von in Draufsicht parallel zueinander verlaufenden Querrillen (6) durchquert ist, welche sich jeweils aus zwei V-förmig zueinander und zur axialen Richtung unter einem Winkel (α) von höchstens 12° verlaufenden Rillenabschnitten (6a) zusammensetzen, wobei die Neigung der Rillenabschnitte (6a) bezüglich der axialen Richtung gleichsinnig zur Neigung der in der jeweils nächstliegenden mittleren Profilrippe (2) verlaufenden Querrillen (8) ist und wobei die Querrillen (6) in der zentralen Profilrippe (1) eine Breite von vorzugsweise 1,8 mm bis 3,5 mm und eine maximale Tiefe von vorzugsweise 70% bis 100%, insbesondere von 100%, der Profiltiefe aufweisen.

7. Fahrzeugluftreifen nach einem der Ansprüche 1 bis 6, **dadurch gekennzeichnet, dass** die zentrale Profilrippe (1), die mittleren Profilrippen (2) und die schulterseitigen Profilrippen (3) jeweils eine an der Laufstreifenperipherie in axialer Richtung ermittelte maximale Breite (b₁, b₂, b₃) aufweisen, wobei die maximale Breite (b₂) der mittleren Profilrippen (2) größer ist als die maximale Breite (b₁) der zentralen Profilrippe (1) und wobei die maximale Breite (b₃) der schulterseitigen Profilrippe (3) innerhalb der Bodenaufstandsfläche ermittelt ist und größer ist als die maximale Breite (b₂) der mittleren Profilrippen (2).

8. Fahrzeugluftreifen nach Anspruch 7, **dadurch gekennzeichnet, dass** die maximale Breite (b₁) der zentralen Profilrippe (1) 13,5% bis 14,7% der in axialer Richtung ermittelten Breite (B) der Bodenaufstandsfläche des Laufstreifens (1) beträgt.

9. Fahrzeugluftreifen nach Anspruch 7 oder 8, **dadurch gekennzeichnet, dass** die maximale Breite (b₂) der mittleren Profilrippen (2) 15,8% bis 17,3% der in axialer Richtung ermittelten Breite (B) der Bodenaufstandsfläche des Laufstreifens sowie vorzugsweise 108% bis 123%, insbesondere 110% bis 120%, der Breite (b₁) der zentralen Profilrippe (1) beträgt.

10. Fahrzeugluftreifen nach einem der Ansprüche 7 bis 9, **dadurch gekennzeichnet, dass** die maximale Breite (b₃) der schulterseitigen Profilrippen (2) 19,0% bis 21,0% der in axialer Richtung ermittelten Breite (B) der Bodenaufstandsfläche des Laufstreifens sowie vorzugsweise 117% bis 127% der Breite (b₂) der mittleren Profilrippen (2) beträgt.

11. Fahrzeugluftreifen nach einem der Ansprüche 1 bis 10, **dadurch gekennzeichnet, dass** die zu den mittleren Profilrippen (2) und die zu den schulterseitigen Profilrippen (3) gehörenden Profilblöcke (2a, 3a) jeweils von einer Anzahl von in Draufsicht parallel zu den Querrillen (8, 9) verlaufenden Einschnitten (10, 11) mit einer Breite von 0,4 mm bis 1,0 mm und einer maximale Tiefe von 75% bis 100% der Profiltiefe durchquert sind.

12. Fahrzeugluftreifen nach einem der Ansprüche 1 bis 11, **dadurch gekennzeichnet**, die zu den mittleren Profilrippen (2) und die zu den schulterseitigen Profilrippen (3) gehörenden Profilblöcke (2a, 3a) jeweils mit einer Anzahl von in Draufsicht zur Umfangsrichtung unter einem Winkel von bis zu 10° verlaufenden, insbesondere senkrecht zu den Querrillen (8, 9) verlaufenden, Mikrorillen (13, 14) mit einer Breite und einer Tiefe von jeweils 0,3 mm bis 0,6 mm versehen sind.

13. Fahrzeugluftreifen nach einem der Ansprüche 1 bis 12, **dadurch gekennzeichnet, dass** die zentrale Profilrippe (1) mit einer Anzahl von in Draufsicht in Umfangsrichtung verlaufenden Mikrorillen (12) mit einer Breite und einer Tiefe von jeweils 0,3 mm bis 0,6 mm versehen ist.

14. Fahrzeugluftreifen nach einem der Ansprüche 1 bis 13, **dadurch gekennzeichnet, dass** die Querrillen (8), welche die mittleren Profilrippen (2) in Profilblöcke (2a) gliedern, in Draufsicht betrachtet, zur axialen Richtung unter einem Winkel (β) von 30° bis 45° verlaufen.

15. Fahrzeugluftreifen nach einem der Ansprüche 1 bis 14, **dadurch gekennzeichnet, dass** die Querrillen (9), welche die schulterseitigen Profilrippen (3) in Profilblöcke (3a) gliedern, in Draufsicht betrachtet, zur axialen Richtung unter einem Winkel (γ) von 0° bis 25°, insbesondere von 5° bis 20°, verlaufen.

## Claims

1. Pneumatic vehicle tyre with a directional tread strip with two shoulder-side profile ribs (3), two middle profile ribs (2) and one central profile rib (1), the profile ribs (1, 2, 3) being separated by two shoulder-side circumferential grooves (5) and two middle circumferential grooves (4), the shoulder-side profile ribs (3) and the middle profile ribs (2) being divided into profile blocks (2a, 3a) by way of transverse grooves (8, 9) which run in a V-shaped manner in plan view across the width of the tread strip, run parallel to one another within the profile ribs (2, 3) and open into the shoulder-side circumferential grooves (5), and the shoulder-side circumferential grooves (5) having groove sections (5a) which run inclined to the circumferential direction in plan view, each separate a profile block (2a) of the middle profile ribs (2) from a profile block (3a) of the shoulder-side profile ribs (3), and have a leading end (5a'), encountering the underlying surface first when the tyre rolls during forward travel, and a trailing end (5a"),
the transverse grooves (8) which run in the middle profile ribs (2) ending in front of the respective middle circumferential groove (4) at a spacing (a₁) determined in the axial direction, the groove sections (5a) of the shoulder-side circumferential grooves (5), seen in plan view, being inclined to the circumferential direction in such a way that the leading ends (5a') of the groove sections (5a) are closer to the tyre equatorial plane (line A-A) in comparison with the trailing ends (5a") of the groove sections (5a),
**characterized**
**in that** the transverse grooves (8, 9) have a width (bqR) of 3.5 mm to 6.5 mm, connecting grooves (15) running between the ends on the inside of the tread strip of the transverse grooves (8) which run in the middle profile ribs (2) and the middle circumferential grooves (4), which connecting grooves are of narrower and shallower design than the transverse grooves (8) running in the middle profile ribs (2).

2. Pneumatic vehicle tyre according to Claim 1, **characterized in that** the spacing (a₁) at which the transverse grooves (8) running in the middle profile ribs (2) end in front of the respective middle circumferential groove (4) is from 3.0 mm to 15.0 mm, in particular 5.0 mm to 10.0 mm.

3. Pneumatic vehicle tyre according to Claim 1 or 2, **characterized in that** the groove sections (5a) of the shoulder-side circumferential grooves (5), in plan view, run at an angle (δ) of 2° to 7°, in particular of at most 5°, with respect to the circumferential direction.

4. Pneumatic vehicle tyre according to one of Claims 1 to 3, **characterized in that** the connecting grooves (15) have a depth of 2.0 mm to 5.0 mm and a width of 1.5 mm to 3.5 mm.

5. Pneumatic vehicle tyre according to one of Claims 1 to 4, **characterized in that** the connecting grooves (15), in plan view, run in the axial direction or at an angle of up to 5° with respect thereto.

6. Pneumatic vehicle tyre according to one of Claims 1 to 5, **characterized in that** the central profile rib (1) is traversed by transverse grooves (6) which run parallel to one another in plan view and which each consist of two groove sections (6a) which run toward one another in a V-shaped manner and at an angle (α) of at most 12° with respect to the axial direction, the inclination of the groove sections (6a) with respect to the axial direction being in the same direction as the inclination of the transverse grooves (8) running in the respective middle profile rib (2) that is nearest, and the transverse grooves (6) in the central profile rib (1) having a width of preferably 1.8 mm to 3.5 mm and a maximum depth of preferably 70% to 100%, in particular 100%, of the profile depth.

7. Pneumatic vehicle tyre according to one of Claims 1 to 6, **characterized in that** the central profile rib (1), the middle profile ribs (2) and the shoulder-side profile ribs (3) each have a maximum width (b₁, b₂, b₃) which is determined in the axial direction on the tread strip periphery, the maximum width (b₂) of the middle profile ribs (2) being greater than the maximum width (b₁) of the central profile rib (1), and the maximum width (b₃) of the shoulder-side profile rib (3) being determined within the ground contact area and being greater than the maximum width (b₂) of the middle profile ribs (2).

8. Pneumatic vehicle tyre according to Claim 7, **characterized in that** the maximum width (b₁) of the central profile rib (1) is 13.5% to 14.7% of the width (B), determined in the axial direction, of the ground contact area of the tread strip (1).

9. Pneumatic vehicle tyre according to Claim 7 or 8, **characterized in that** the maximum width (b₂) of the middle profile ribs (2) is 15.8% to 17.3% of the width (B), determined in the axial direction, of the ground contact area of the tread strip, and preferably 108% to 123%, in particular 110% to 120%, of the width (b₁) of the central profile rib (1).

10. Pneumatic vehicle tyre according to one of Claims 7 to 9, **characterized in that** the maximum width (b₃) of the shoulder-side profile ribs (2) is 19.0% to 21.0% of the width (B), determined in the axial direction, of the ground contact area of the tread strip, and preferably 117% to 127% of the width (b₂) of the middle profile ribs (2).

11. Pneumatic vehicle tyre according to one of Claims 1 to 10, **characterized in that** the profile blocks (2a, 3a) belonging to the middle profile ribs (2) and to the shoulder-side profile ribs (3) are in each case traversed by a number of sipes (10, 11) running parallel to the transverse grooves (8, 9) in plan view with a width of 0.4 mm to 1.0 mm and a maximum depth of 75% to 100% of the profile depth.

12. Pneumatic vehicle tyre according to one of Claims 1 to 11, **characterized in that** the profile blocks (2a, 3a) belonging to the middle profile ribs (2) and to the shoulder-side profile ribs (3) are in each case provided with a number of microgrooves (13, 14) running, in plan view, at angle of up to 10° with respect to the circumferential direction, in particular perpendicular to the transverse grooves (8, 9), with a width and a depth of 0.3 mm to 0.6 mm in each case.

13. Pneumatic vehicle tyre according to one of Claims 1 to 12, **characterized in that** the central profile rib (1) is provided with a number of microgrooves (12) running in the circumferential direction in plan view and having a width and a depth of 0.3 mm to 0.6 mm each.

14. Pneumatic vehicle tyre according to one of Claims 1 to 13, **characterized in that** the transverse grooves (8) which divide the middle profile ribs (2) into profile blocks (2a), viewed in plan view, run at an angle (β) of 30° to 45° with respect to the axial direction.

15. Pneumatic vehicle tyre according to one of Claims 1 to 14, **characterized in that** the transverse grooves (9) which divide the shoulder-side profile ribs (3) into profile blocks (3a), viewed in plan view, run at an angle (γ) of 0° to 25°, in particular of 5° to 20° with respect to the axial direction.

## Revendications

1. Bandage pneumatique de véhicule comportant une bande de roulement directionnelle dotée de deux nervures profilées (3) côté épaulement, de deux nervures profilées (2) intermédiaires et d'une nervure profilée (1) centrale, les nervures profilées (1, 2, 3) étant séparées par deux rainures périphériques (5) côté épaulement et deux rainures périphériques (4) intermédiaires, les nervures profilées (3) côté épaulement et les nervures profilées (2) intermédiaires étant divisées en blocs profilés (2a, 3a) par des rainures transversales (8, 9) s'étendant parallèlement les unes aux autres en forme de V en vue de dessus sur la largeur de la bande de roulement et à l'intérieur des nervures profilées (2, 3) et débouchant dans les rainures périphériques (5) côté épaulement, et les rainures périphériques (5) côté épaulement présentant des parties de rainure (5a) s'étendant de manière inclinée par rapport à la direction périphérique en vue de dessus, séparant respectivement un bloc profilé (2a) des nervures profilées (2) intermédiaires d'un bloc profilé (3a) des nervures profilées (3) côté épaulement, lesquelles parties de rainure présentent une extrémité d'entrée (5a') entrant d'abord en contact avec la surface sous-jacente lors d'un roulement du bandage lors d'une marche avant et une extrémité de sortie (5a"),
les rainures transversales (8), lesquelles s'étendent dans les nervures profilées (2) intermédiaires, se terminant avant la rainure périphérique (4) intermédiaire respective à une distance (a₁) déterminée dans la direction axiale, les parties de rainure (5a) des rainures périphériques (5) côté épaulement, vues en vue de dessus, étant inclinées par rapport à la direction périphérique de telle sorte que les extrémités d'entrée (5a') des parties de rainure (5a) se trouvent plus près du plan équatorial de bandage (ligne A-A) que les extrémité de sortie (5a") des parties de rainure (5a),
**caractérisé en ce que**
les rainures transversales (8, 9) présentent une largeur (b_{QR}) allant de 3,5 mm à 6,5 mm, des rainures de liaison (15), lesquelles sont plus étroites et sont réalisées de façon moins profonde que les rainures transversales (8) s'étendant dans les nervures profilées (2) intermédiaires, s'étendant entre les extrémités côté intérieur de bande de roulement des rainures transversales (8), qui s'étendent dans les nervures profilées (2) intermédiaires, et les rainures périphériques (4) intermédiaires.

2. Bandage pneumatique de véhicule selon la revendication 1, **caractérisé en ce que** la distance (a₁), à laquelle les rainures transversales (8) qui s'étendent dans les nervures profilées (2) intermédiaires se terminent avant la rainure périphérique (4) intermédiaire respective, vaut de 3,0 mm à 15,0 mm, en particulier de 5,0 mm à 10,0 mm.

3. Bandage pneumatique de véhicule selon la revendication 1 ou 2, **caractérisé en ce que** les parties de rainure (5a) des rainures périphériques (5) côté épaulement, vues en vue de dessus, s'étendent par rapport à la direction périphérique suivant un angle (δ) allant de 2° à 7°, en particulier de 5° au maximum.

4. Bandage pneumatique de véhicule selon l'une des revendications 1 à 3, **caractérisé en ce que** les rainures de liaison (15) présentent une profondeur de 2,0 mm à 5,0 mm et une largeur de 1,5 mm à 3,5 mm.

5. Bandage pneumatique de véhicule selon l'une des revendications 1 à 4, **caractérisé en ce que** les rainures de liaison (15), vues en vue de dessus, s'étendent dans la direction axiale ou suivant un angle de jusqu'à 5° par rapport à celle-ci.

6. Bandage pneumatique de véhicule selon l'une des revendications 1 à 5, **caractérisé en ce que** la nervure profilée (1) centrale est traversée par des rainures transversales (6) s'étendant parallèlement les unes aux autres en vue de dessus, lesquelles rainures transversales se composent respectivement de deux parties de rainure (6a) s'étendant en forme de V l'une par rapport à l'autre et suivant un angle (α) de 12° au maximum par rapport à la direction axiale, l'inclinaison des parties de rainure (6a) par rapport à la direction axiale étant de même sens que l'inclinaison des rainures transversales (8) s'étendant dans la nervure profilée (2) intermédiaire respectivement la plus proche et les rainures transversales (6) dans la nervure profilée (1) centrale présentant une largeur de 1,8 mm à 3,5 mm de préférence et une profondeur maximale de 70% à 100% de préférence, en particulier de 100%, de la profondeur de profilé.

7. Bandage pneumatique de véhicule selon l'une des revendications 1 à 6, **caractérisé en ce que** la nervure profilée (1) centrale, les nervures profilées (2) intermédiaires et les nervures profilées (3) côté épaulement présentent respectivement une largeur maximale (b₁, b₂, b₃) déterminée au niveau de la périphérie de la bande de roulement dans la direction axiale, la largeur maximale (b₂) des nervures profilées (2) intermédiaires étant supérieure à la largeur maximale (b₁) de la nervure profilée (1) centrale et la largeur maximale (b₃) de la nervure profilée (3) côté épaulement à l'intérieur de la surface de contact au sol étant déterminée et étant supérieure à la largeur maximale (b₂) des nervures profilées (2) intermédiaires.

8. Bandage pneumatique de véhicule selon la revendication 7, **caractérisé en ce que** la largeur maximale (b₁) de la nervure profilée (1) centrale vaut de 13,5% à 14,7% de la largeur (B), déterminée dans la direction axiale, de la surface de contact au sol de la bande de roulement (1).

9. Bandage pneumatique de véhicule selon la revendication 7 ou 8, **caractérisé en ce que** la largeur maximale (b₂) des nervures profilées (2) intermédiaires vaut de 15,8% à 17,3% de la largeur (B), déterminée dans la direction axiale, de la surface de contact au sol de la bande de roulement et de préférence de 108% à 123%, en particulier de 110% à 120%, de la largeur (b₁) de la nervure profilée (1) centrale.

10. Bandage pneumatique de véhicule selon l'une des revendications 7 à 9, **caractérisé en ce que** la largeur maximale (b₃) des nervures profilées (2) côté épaulement vaut de 19,0% à 21,0% de la largeur (B), déterminée dans la direction axiale, de la surface de contact au sol de la bande de roulement et de préférence de 117% à 127% de la largeur (b₂) des nervures profilées (2) intermédiaires.

11. Bandage pneumatique de véhicule selon l'une des revendications 1 à 10, **caractérisé en ce que** les blocs profilés (2a, 3a) appartenant aux nervures profilées (2) intermédiaires et ceux appartenant aux nervures profilées (3) côté épaulement sont traversés respectivement par un certain nombre d'entailles (10, 11) s'étendant parallèlement aux rainures transversales (8, 9) en vue de dessus, lesquelles entailles présentent une largeur allant de 0,4 mm à 1,0 mm et une profondeur maximale allant de 75% à 100% de la profondeur de profilé.

12. Bandage pneumatique de véhicule selon l'une des revendications 1 à 11, **caractérisé en ce que** les blocs profilés (2a, 3a) appartenant aux nervures profilées (2) intermédiaires et ceux appartenant aux nervures profilées (3) côté épaulement sont pourvus respectivement d'un certain nombre de micro-rainures (13, 14) s'étendant suivant un angle de jusqu'à 10° par rapport à la direction périphérique en vue de dessus, en particulier s'étendant perpendiculairement aux rainures transversales (8, 9), lesquelles micro-rainures présentent une largeur et une profondeur de respectivement 0,3 mm à 0,6 mm.

13. Bandage pneumatique de véhicule selon l'une des revendications 1 à 12, **caractérisé en ce que** la nervure profilée (1) centrale est pourvue d'un certain nombre de micro-rainures (12) s'étendant dans la direction périphérique en vue de dessus, lesquelles micro-rainures présentent une largeur et une profondeur de respectivement 0,3 mm à 0,6 mm.

14. Bandage pneumatique de véhicule selon l'une des revendications 1 à 13, **caractérisé en ce que** les rainures transversales (8) qui divisent les nervures profilées (2) intermédiaires en blocs profilés (2a), vues en vue de dessus, s'étendent par rapport à la direction axiale suivant un angle (β) allant de 30° à 45°.

15. Bandage pneumatique de véhicule selon l'une des revendications 1 à 14, **caractérisé en ce que** les rainures transversales (9) qui divisent les nervures profilées (3) côté épaulement en blocs profilés (3a), vues en vue de dessus, s'étendent par rapport à la direction axiale suivant un angle (γ) allant de 0° à 25°, en particulier allant de 5° à 20°.
